# EUROPEAN PATENT APPLICATION

(11) **EP 4 375 860 A1**
(43) Date of publication of application: **29.05.2024**
(21) Application number: 22857289.7
(22) Date of filing: 06.04.2022
(51) Int. Cl.: G06F 21/56

(54) **ATTACK DETECTION METHOD AND APPARATUS**

(30) Priority: 20.08.2021 CN 202110959827; 10.09.2021 CN 202111064335
(71) Applicant: Huawei Technologies Co., Ltd., Shenzhen, Guangdong 518129 (CN)
(72) Inventor: TANG, Wen, Shenzhen, Guangdong 518129 (CN)
(74) Representative: Thun, Clemens
(86) International application number: PCT/CN2022/085391
(87) International publication number: WO 2023/019970

(57) **Abstract**

This application relates to the field of Al, and discloses an attack detection method and apparatus, to resolve a problem that precision of processing a sample by an application model decreases because the application model is reconstructed in a static defense method. The attack detection method includes: First, an attack detection model obtains an inference request, where the inference request carries a to-be-processed dataset of an application model, and the to-be-processed dataset includes one or more samples. Second, the attack detection model detects whether a physical adversarial example exists in the to-be-processed dataset. Finally, the attack detection model performs protection processing on the application model if the physical adversarial example exists in the to-be-processed dataset. In embodiments, the attack detection model different from the application model is used to detect whether the physical adversarial example exists in the inference request. Because the application model does not need to resist a physical adversarial attack, model retraining, defensive distillation, or the like does not need to be performed on the application model, so that a decrease in precision of the application model caused by reconstruction of the application model is avoided.

## Description

This application claims priority to Chinese Patent Application No. 202110959827.5, filed with the China National Intellectual Property Administration on August 20, 2021 and entitled "ATTACK DETECTION METHOD, APPARATUS AND SYSTEM", and further claims priority to Chinese Patent Application No. 202111064335.6, filed with the China National Intellectual Property Administration on September 10, 2021 and entitled "ATTACK DETECTION METHOD AND APPARATUS", both of which are incorporated herein by reference in their entireties.

### TECHNICAL FIELD

This application relates to the field of artificial intelligence (artificial intelligence, Al), and in particular, to an attack detection method and apparatus.

### BACKGROUND

A deep neural network (Deep Neural Network, DNN) is widely used in the field of computer vision (Computer Vision, CV), speech recognition, natural language processing (Natural Language Processing, NLP), and the like. In a process of using a DNN-based application model, to steal parameter configuration, data, or the like of the application model, an attacker launches an attack on the application model in a digital adversarial attack manner or a physical adversarial attack manner. In a digital adversarial attack, the attacker may control bit (bit) -level data to attack the application model. In a physical adversarial attack, the attacker constructs a physical adversarial example (adversarial example) in a real physical world to attack the application model.

Using detecting the physical adversarial attack as an example, the application model uses a model-related static defense method to detect the physical adversarial attack. For example, the static defense method is a model retraining method or defensive distillation. However, the static defense method depends on reconstruction of the application model, resulting in a decrease in precision of processing a sample by the application model. Therefore, how to detect the physical adversarial attack becomes an urgent problem to be resolved currently.

### SUMMARY

This application provides an attack detection method and apparatus, to resolve a problem that precision of processing a sample by an application model decreases because the application model is reconstructed in a static defense method.

To implement the foregoing objective, the following technical solutions are used in this application.

According to a first aspect, an embodiment of this application provides an attack detection method. The method may be applied to a terminal device, or the method may be applied to a server that can support a terminal device in implementing the method. For example, the server includes a chip system. The method includes: First, an attack detection model obtains an inference request, where the inference request carries a to-be-processed dataset of an application model, and the to-be-processed dataset includes one or more samples. Second, the attack detection model detects whether a physical adversarial example exists in the to-be-processed dataset. Finally, the attack detection model performs protection processing on the application model if the physical adversarial example exists in the to-be-processed dataset.

In this embodiment, the attack detection model different from the application model is used to detect whether the physical adversarial example exists in the inference request. Because the application model does not need to resist a physical adversarial attack (adversarial attack), model retraining, defensive distillation, or the like does not need to be performed on the application model, so that a decrease in precision of the application model caused by reconstruction of the application model is avoided.

In addition, in some possible cases, the attack detection model may further use a detected physical adversarial example for training, to optimize an attack detection capability of the attack detection model, and improve accuracy of physical adversarial attack detection.

In an optional implementation, the attack detection model is determined based on a training dataset, and the training dataset includes a plurality of physical adversarial examples and a plurality of standard samples for the application model. Generally, a processing capability of a computing device dedicated to model training and generation is stronger than a processing capability of a terminal. Compared with a process of obtaining an attack detection model through training by the terminal, if a training process of the attack detection model is performed by the computing device (for example, a server), a training time for the attack detection model is shorter, and training efficiency is higher. The terminal may determine, by using the attack detection model, whether the physical adversarial example exists in the inference request, to perform protection processing on the application model when the physical adversarial example exists in the inference request. Because the application model does not need to resist a physical adversarial attack, the server does not need to perform model retraining, defensive distillation, or the like on the application model, so that a decrease in precision of the application model caused by reconstruction of the application model is avoided.

In another optional implementation, that the attack detection model detects whether a physical adversarial example exists in the to-be-processed dataset includes: For each sample included in the to-be-processed dataset, the attack detection model outputs security information of the sample, where the security information indicates confidence that the sample includes a physical adversarial perturbation (adversarial perturbation). In addition, the attack detection model identifies the sample as a physical adversarial example for the application model if the confidence of the sample reaches a first threshold. For example, if the to-be-processed dataset includes only one sample, and when the sample is identified as the physical adversarial example by the attack detection model, the attack detection model may use the inference request as an attack request for the application model.

In another optional implementation, the security information of the sample is obtained by a feature detection module included in the attack detection model. In this embodiment, because the attack detection model may perform physical adversarial attack detection on the sample carried in the inference request, a process of resisting a physical adversarial attack by the application model is replaced, so that the attack detection model replaces the application model to implement a function of physical adversarial attack detection. Therefore, the application model does not need to be reconstructed to resist the physical adversarial attack, and a decrease in precision of the application model caused by a reconstruction process of the application model in a common technology is avoided.

In another optional implementation, that the attack detection model detects whether a physical adversarial example exists in the to-be-processed dataset further includes: The attack detection model outputs a detection result of the to-be-processed dataset based on security information of a plurality of samples included in the to-be-processed dataset. In this embodiment, if the to-be-processed dataset includes a plurality of samples, the attack detection model may determine the detection result of the physical adversarial attack detection of the inference request based on the confidence that each sample in the plurality of samples includes the physical adversarial perturbation, avoiding the attack detection model incorrectly determining that the to-be-processed dataset includes a small quantity of physical adversarial examples by chance, and further determines the inference request as an attack request, so that accuracy of physical adversarial attack detection performed by the attack detection model is improved.

In another optional implementation, that the attack detection model outputs a detection result of the to-be-processed dataset based on security information of a plurality of samples included in the to-be-processed dataset includes: The attack detection model stores the physical adversarial example in a sequence detection module included in the attack detection model; and if a quantity of physical adversarial examples in the plurality of samples is greater than or equal to a first quantity, the sequence detection module determines that the inference request is an attack request. In this way, in this embodiment, the sequence detection module identifies the inference request as the attack request only when the inference request has a specific quantity of physical adversarial examples, to avoid incorrectly identifying the inference request as the attack request when the feature detection module incorrectly identifies that the inference request has a single physical adversarial example or a small quantity of physical adversarial examples, so that identification accuracy of the attack detection model is improved.

Optionally, when the application detection model and the attack detection model are deployed in a serial mode, if the inference request does not carry the physical adversarial example, the attack detection model forwards the inference request to the application model, so that the application model performs AI processing on the inference request. Before the application model receives the inference request, the attack detection model already performed physical adversarial attack detection on the inference request, to ensure that the inference request obtained by the application model does not carry the physical adversarial example. This greatly reduces a probability that the application model is attacked, and improves security of the application model.

In another optional implementation, that the attack detection model performs protection processing on the application model includes: The attack detection model blocks the application model from processing the inference request. For example, a protected application model does not need to be changed. The attack detection model determines whether an input sample included in the inference request is a physical adversarial example, and feeds back a result to a corresponding access control mechanism, so that the attack detection model blocks the physical adversarial attack.

In a possible example, "blocking" means setting output information of the application model to be invalid. For example, that the attack detection model blocks the application model from processing the inference request includes: The attack detection model sets a processing result output by the application model to an invalid result. Because the processing result output by the application model is set to an invalid result, no valid output for AI processing performed by the application model on the physical adversarial example exists, and an attacker cannot obtain a model parameter or other data of the application model by using the physical adversarial example included in the inference request, so that security of the application model is improved.

In another possible example, "blocking" means discarding input information of the application model. For example, that the attack detection model blocks the application model from processing the inference request includes: The attack detection model discards the inference request. Because the attack detection model D31 determines that the inference request includes the physical adversarial example, and discards the inference request, the application model cannot obtain the physical adversarial example used by the attacker to perform the physical adversarial attack. In other words, the application model does not process the physical adversarial example if the application model does not perform input. Therefore, the attacker cannot obtain a model parameter or other data of the application model, so that security of the application model is improved.

In this way, because a protected application model does not need to be changed, the protected application model may also be defended against the physical adversarial attack by the attack detection model. Therefore, precision of the application model is not decreased due to reconstruction, and accuracy of the application model is improved.

In another optional implementation, the attack detection method further includes: The attack detection model records an alarm log, where the alarm log indicates that the inference request includes the physical adversarial example. The alarm log may be used for subsequent protection for a protected application model. For example, if the inference request has only a small quantity of physical adversarial examples within a specific time length, the application model is not affected. To be specific, the small quantity of physical adversarial examples in one inference request are generally not determined as physical adversarial attacks of the application model. Security of the application model is affected only when the application model is continuously attacked by physical adversarial examples in a plurality of inference requests. In this way, the attack detection model may record only the alarm log, so that the application model is protected only when the physical adversarial attacks continuously occur, so that a case in which the application model is in a disabled status due to a determining error of the attack detection model is avoided, and availability of the application model is improved.

According to a second aspect, an embodiment of this application provides an attack detection apparatus. The attack detection apparatus includes modules configured to perform the attack detection method according to any one of the first aspect or the possible implementations of the first aspect. The apparatus may be implemented by a software module, or may be hardware having a corresponding function, for example, a server or a terminal.

For beneficial effects, refer to descriptions in any one of the first aspect. Details are not described herein again. The attack detection apparatus has functions of implementing behavior in the method instance according to any one of implementations of the first aspect. The functions may be implemented by hardware, or may be implemented by executing corresponding software by hardware. For example, the attack detection apparatus is used in a server, or an apparatus supporting the server in implementing the foregoing attack detection method.

The hardware or the software includes one or more modules corresponding to the foregoing functions. In a possible design, the attack detection apparatus is used in an attack detection model. The attack detection apparatus includes: a communication unit, configured to obtain an inference request, where the inference request carries a to-be-processed dataset of an application model, and the to-be-processed dataset includes one or more samples; a detection unit, configured to detect whether a physical adversarial example exists in the to-be-processed dataset; and a protection unit, configured to perform protection processing on the application model if the physical adversarial example exists in the to-be-processed dataset.

In an optional implementation, the attack detection model is determined based on a training dataset, and the training dataset includes a plurality of physical adversarial examples and a plurality of standard samples for the application model.

In another optional implementation, the detection unit is specifically configured to: for each sample included in the to-be-processed dataset, output security information of the sample, where the security information indicates confidence that the sample includes a physical adversarial perturbation. The detection unit is specifically configured to identify the sample as a physical adversarial example for the application model if the confidence of the sample reaches a first threshold.

In another optional implementation, the security information of the sample is obtained by a feature detection module included in the attack detection model.

In another optional implementation, the detection unit is further configured to output a detection result of the to-be-processed dataset based on security information of a plurality of samples included in the to-be-processed dataset.

In another optional implementation, the detection unit is specifically configured to store the physical adversarial example in a sequence detection module included in the attack detection model. The detection unit is specifically configured to: if a quantity of physical adversarial examples in the plurality of samples is greater than or equal to a first quantity, determine that the inference request is an attack request.

In another optional implementation, the protection unit is specifically configured to block the application model from processing the inference request. For example, the protection unit is specifically configured to set a processing result output by the application model to an invalid result. For another example, the protection unit is specifically configured to discard the inference request.

In another optional implementation, the attack detection apparatus further includes an alarm unit, configured to record an alarm log. The alarm log indicates that the inference request includes the physical adversarial example.

According to a third aspect, an embodiment of this application provides an attack detection system. The attack detection system includes models configured to perform the attack detection method according to any one of the first aspect or the possible implementations of the first aspect. The system may be implemented by a software module, or may be hardware having a corresponding function, such as a first device and a second device. For example, the first device is a server, and the second device is a terminal.

For beneficial effects, refer to descriptions in any one of the first aspect. Details are not described herein again. The attack detection system has functions of implementing behavior in the method instance according to any one of implementations of the first aspect. The functions may be implemented by hardware, or may be implemented by executing corresponding software by hardware. For example, the attack detection system is used in a server, or an apparatus supporting the server in implementing the foregoing attack detection method.

The hardware or the software includes one or more modules corresponding to the foregoing functions. In a possible design, the attack detection system includes a first device and a second device. An attack detection model is deployed in the first device. An application model is deployed in the second device. The first device obtains an inference request of a client, where the inference request carries a to-be-processed dataset of the application model, and the to-be-processed dataset includes one or more samples; the first device detects whether a physical adversarial example exists in the to-be-processed dataset; and if the physical adversarial example exists in the to-be-processed dataset, the first device performs protection processing on the application model deployed in the second device.

It should be noted that in some possible examples, the first device and the second device are different processing units running in a same physical device, and in this case, the attack detection system is the physical device. For example, the physical device may be a server, a mobile phone, a tablet computer, a personal computer, or another computing device having a model processing capability.

For example, the physical device is a server, the first device is a first processor in the server, and the second device is a second processor that is in the server and that is different from the first processor.

For another example, the physical device is a processor in the server, the first device is a first processing unit in the processor, and the second device is a second processing unit that is in the processor and that is different from the first processing unit.

According to a fourth aspect, an embodiment of this application provides a server. The server includes a processor and an interface circuit. The interface circuit is configured to receive a signal from another device other than the server and transmit the signal to the processor, or send a signal from the processor to another device other than the server. The processor is configured to implement the operation steps of the method according to any one of the first aspect or the possible implementations of the first aspect by using a logic circuit or executing code instructions.

According to a fifth aspect, an embodiment of this application provides a terminal. The terminal includes a processor and an interface circuit. The interface circuit is configured to receive a signal from another device other than a server and transmit the signal to the processor, or send a signal from the processor to another device other than the server. The processor is configured to implement the operation steps of the method according to any one of the first aspect or the possible implementations of the first aspect by using a logic circuit or executing code instructions.

According to a sixth aspect, an embodiment of this application provides a computer-readable storage medium. The storage medium stores a computer program or instructions. When the computer program or the instructions are executed by a processor in a server, the operation steps of the method according to any one of the first aspect or the possible implementations of the first aspect are implemented.

According to a seventh aspect, an embodiment of this application provides a computer program product. The computer program product includes instructions. When the computer program product runs on a server or a terminal, the server or the terminal executes the instructions, to implement the attack detection method according to any one of the first aspect or the possible implementations of the first aspect.

According to an eighth aspect, an embodiment of this application provides a chip. The chip includes a control circuit and an interface circuit. The interface circuit is configured to input information and/or output information. The logic circuit is configured to perform the foregoing aspects or the possible implementations of the foregoing aspects, to process input information and/or generate output information.

For example, the interface circuit may obtain an inference request, and the logic circuit may implement the attack detection method according to the first aspect or the possible implementations of the first aspect for the inference request.

In this application, based on implementations according to the foregoing aspects, the implementations may be further combined to provide more implementations.

### BRIEF DESCRIPTION OF DRAWINGS

FIG. 1 is a schematic diagram of a structure of an attack detection system according to this application;
FIG. 2 is a schematic diagram of obtaining an attack detection model according to this application;
FIG. 3 is a first schematic flowchart of an attack detection method according to this application;
FIG. 4 is a second schematic flowchart of an attack detection method according to this application;
FIG. 5 is a third schematic flowchart of an attack detection method according to this application;
FIG. 6 is a schematic diagram of a structure of an attack detection apparatus according to this application; and
FIG. 7 is a schematic diagram of a structure of a physical device according to this application.

### DESCRIPTION OF EMBODIMENTS

To resolve the problem proposed in the background, embodiments of this application provide an attack detection method. The method includes: First, an attack detection model obtains an inference request, where the inference request carries a to-be-processed dataset of an application model, and the to-be-processed dataset includes one or more samples. Second, the attack detection model detects whether a physical adversarial example exists in the to-be-processed dataset. Finally, the attack detection model performs protection processing on the application model if the physical adversarial example exists in the to-be-processed dataset. In the embodiments, the attack detection model different from the application model is used to detect whether the physical adversarial example exists in the inference request. Because the application model does not need to resist a physical adversarial attack, model retraining, defensive distillation, or the like does not need to be performed on the application model, so that a decrease in precision of the application model caused by reconstruction of the application model is avoided.

In addition, in some possible cases, the attack detection model may further use a detected physical adversarial example for training, to optimize an attack detection capability of the attack detection model, and improve accuracy of physical adversarial attack detection.

For clear and brief description of the following embodiments, a related technology is briefly described first.

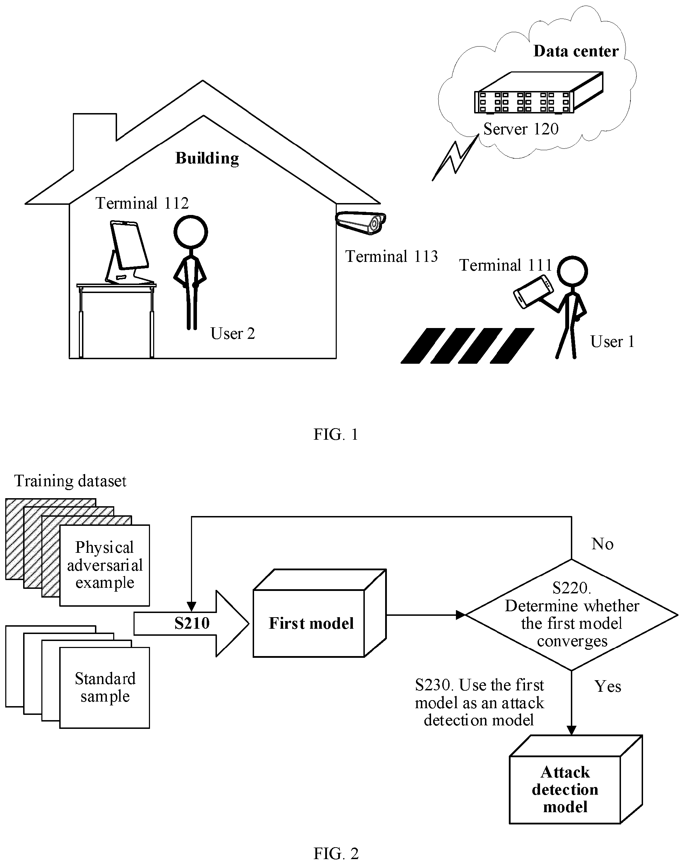

FIG. 1 is a schematic diagram of a structure of an attack detection system according to this application. As shown in FIG. 1, the attack detection system includes a data center and a plurality of terminals (a terminal 111 to a terminal 113 shown in FIG. 1). The data center may communicate with the terminal by using a network, and the network may be the Internet or another network. The network may include one or more network devices. For example, the network device may be a router, a switch, or the like.

The data center includes one or more servers, for example, a server 120 shown in FIG. 1 and an application server supporting an application service. The application server may provide a video service, an image service, another AI processing service based on a video or an image, and the like. In an optional case, the server 120 refers to a server cluster in which a plurality of servers are deployed. The server cluster may have a rack. The rack may establish communication for the plurality of servers by using a wired connection, for example, a universal serial bus (universal serial bus, USB) or a peripheral component interconnect express (peripheral component interconnect express, PCIe) high-speed bus.

The server 120 may further obtain data from the terminal, and after performing AI processing on the data, send an AI processing result to a corresponding terminal. The AI processing may be performing object recognition, target detection, and the like on data by using an AI model, or may be obtaining, based on a sample collected by the terminal, an AI model that meets a requirement, or the like.

In addition, the data center may further include another physical device having an AI processing function, for example, a mobile phone, a tablet computer, or another device.

The terminal (Terminal) may also be referred to as a terminal device, user equipment (user equipment, UE), a mobile station (mobile station, MS), a mobile terminal (mobile terminal, MT), or the like. The terminal may be a mobile phone (the terminal 111 shown in FIG. 1), a face-scanning payment device (the terminal 112 shown in FIG. 1) having a mobile payment function, a camera device (the terminal 113 shown in FIG. 1) having a data (such as an image or a video) collection and processing function, or the like. The terminal may also be a tablet computer (Pad), a computer with a wireless sending and receiving function, a virtual reality (Virtual Reality, VR) terminal device, an augmented reality (Augmented Reality, AR) terminal device, a wireless terminal in industrial control (industrial control), or a wireless terminal in self-driving (self-driving), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

It should be noted that a user may obtain, by using the terminal, an AI model stored in the server 120, and the like. For example, the AI model may be a model for performing operations such as target detection, object recognition, or classification on data.

For example, a user 1 uses an AI model deployed in the terminal 111 to implement functions such as facial recognition and fingerprint recognition of a mobile phone.

For another example, a user 2 uses an AI model deployed in the terminal 112 to implement functions such as face-scanning payment and object classification (for example, commodity classification).

For another example, an AI model deployed in the terminal 113 may be configured to implement functions such as object detection.

FIG. 1 is merely a schematic diagram, and should not be construed as a limitation on this application. Application scenarios of the terminal and the server are not limited in embodiments of this application.

Based on the attack detection system shown in FIG. 1, this application provides an attack detection model training method. FIG. 2 is a schematic diagram of obtaining an attack detection model according to this application. The attack detection model training method may be performed by the server 120, or may be performed by any one of the terminal 111 to the terminal 113. In some possible examples, the training method may be further performed by another device.

An example in which the attack detection model training method is performed by the server 120 is used for description herein. Refer to FIG. 2. A process of obtaining the attack detection model may include the following steps S210 to S230.

S210. The server 120 obtains a training dataset.

The training dataset includes a plurality of physical adversarial examples and a plurality of standard samples for an application model.

A standard sample is a sample that meets an input requirement of the application model and does not have an adversarial attack. In some cases, the standard sample is referred to as a normal sample.

In the adversarial attack (adversarial attack), some unperceivable noises are added to input data, so that the application model may make an incorrect judgment on the input data. The added noises are called adversarial perturbations (adversarial perturbation), and a sample obtained after the noises are added is called an adversarial example (adversarial example).

The adversarial attack includes a physical adversarial attack and a digital adversarial attack. In the digital adversarial attack, a computer controls a bit-level data change in a sample, to generate a digital adversarial example with a digital adversarial perturbation. As a result, an error occurs in processing the digital adversarial example by the application model. In the physical adversarial attack, when a deep learning model is deployed in the real world, a physical adversarial example is constructed by using a physical adversarial perturbation (such as an obstruction in front of a face in an image, which interferes with face recognition) generated in the real world. As a result, an error occurs in processing the physical adversarial example by the application model.

The physical adversarial example refers to a sample constructed by an attacker in the real world with the physical adversarial perturbation. For example, the physical adversarial example may be an example in another different scenario. For example, the scenario may be target detection, object recognition, object classification, or another possible scenario, such as face-scanning payment, video surveillance, or access control detection.

It should be noted that the attack detection model is trained herein, and the attack detection model is further configured to determine the physical adversarial attack. Therefore, in a training process, the server 120 may mark the physical adversarial example as a positive (positive) sample, and mark the standard sample as a negative (negative) sample.

To improve an attack detection capability of the attack detection model, the server 120 further marks an adversarial perturbation or an attack pattern in the physical adversarial example.

S220. The server 120 trains a first model by using the training dataset, and determines whether the first model converges.

The first model is determined based on an application scenario or field to which the application model is applicable.

In a possible example, the first model and the application model are neural network models of a same type. For example, if the application model is a convolutional neural network (Convolutional Neural Network, CNN) model, the first model may also be a CNN model. For another example, if the application model is a recurrent neural network (Recurrent Neural Network, RNN) model or a transformer-based model, the first model may be an RNN model or a transformer-based model.

In another possible example, the first model and the application model are neural network models of different types. For example, if the application model is a CNN model, the first model may be an RNN model.

It should be noted that the foregoing two examples are merely possible implementations provided in this embodiment for describing the first model and the application model. In some possible cases, the application model may have a plurality of types of networks. For example, the application model is a composite neural network having a CNN and an RNN, and the first model may have one or more types of neural networks.

The server 120 may set a training (hyper) parameter such as a loss function and an optimization method for the first model based on the application model, and trains the first model by using the foregoing training dataset. A training manner includes but is not limited to: using an existing pre-trained model as the first model, and performing fine-tuning (fine-tuning) training on the pre-trained model.

If the first model converges, S230 is performed; or if the training model does not converge, the server 120 trains the first model for a plurality of times by using the training dataset until the first model converges. Convergence of the first model means that a quantity of times of training the first model by the server 120 reaches a threshold (for example, 50,000 times), or accuracy of detecting the physical adversarial example and the standard sample by the first model reaches a threshold (for example, 99%). This is not limited in this application.

S230. The server 120 uses the first model as the attack detection model.

It should be noted that in the method provided in this embodiment of this application, a process of training the attack detection model may be performed by a server, or may be performed by a terminal. This is not limited in this application.

In some possible examples, the attack detection model may alternatively be obtained by another computing device through training, and the another computing device sends the attack detection model obtained through training to the server or the terminal provided in this embodiment of this application. For example, the another computing device may include at least one processor. The processor may be an integrated circuit chip and has a signal processing capability. The processor may be a general-purpose processor, including a central processing unit (Central Processing Unit, CPU), a network processor (Network Processor, NP), and the like; or may be a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. For example, when the another computing device has only one processor, the processor may implement S210 to S230 and possible sub-steps thereof. For another example, when the another computing device includes a plurality of processors, the plurality of processors may collaboratively implement the foregoing S210 to S230 and the possible sub-steps thereof. For example, the plurality of processors include a first processor and a second processor, the first processor may implement the foregoing S210 and S220, and the second processor may implement the foregoing S230.

Generally, a processing capability of a computing device dedicated to model training and generation is stronger than a processing capability of a terminal. Compared with a process of obtaining an attack detection model through training by the terminal, if a training process of the attack detection model is performed by the computing device (for example, the foregoing server 120), a training time for the attack detection model is shorter, and training efficiency is higher. The terminal may determine, by using the attack detection model, whether the physical adversarial example exists in the inference request, to perform protection processing on the application model when the physical adversarial example exists in the inference request. Because the application model does not need to resist a physical adversarial attack, the server does not need to perform model retraining, defensive distillation, or the like on the application model, so that a decrease in precision of the application model caused by reconstruction of the application model is avoided.

In addition, in some possible attack detection processes, the attack detection model may further use a detected physical adversarial example for training, to optimize an attack detection capability of the attack detection model, and improve accuracy of attack detection.

For the training process shown in FIG. 2, the server may further train, based on a deep neural network, the physical adversarial example to obtain a feature detection module, where the feature detection module is a part of the foregoing attack detection model. Further, the server obtains the attack detection model by combining the feature detection module with another module.

This embodiment provides a possible specific implementation for a process in which the server obtains the attack detection model.

First, the server uses a latest physical adversarial attack method disclosed in the industry to generate a corresponding physical adversarial example (a video and a photo) as a positive sample in different environments (indoor, outdoor, different illumination, different faces, and the like). These physical adversarial examples may cause a determining error in an Al-based object recognition system.

Second, the server further marks, in the foregoing physical adversarial example (videos and photos) by using a manual or automatic method, a region in which the physical adversarial perturbation exists.

In addition, the server obtains a normal sample (a video and a photo) of a corresponding object in same or similar environments (indoor, outdoor, different illumination, and the like) as a negative sample.

Finally, the server selects a proper DNN architecture by using the foregoing marked positive and negative samples, sets a training (hyper) parameter such as a loss function and an optimization method, and trains a corresponding attack detection model in a data-driven manner by using the marked samples (training datasets) in the foregoing steps. The attack detection model can detect, with high precision, a physical adversarial perturbation in a video and a picture, to distinguish physical adversarial input (a physical adversarial example) from normal input (a standard sample), and provide corresponding confidence, a corresponding probability, or the like based on the determining of the attack detection model.

The following describes in detail, based on the foregoing attack detection model and with reference to the accompanying drawings, an implementation of the attack detection method provided in this embodiment.

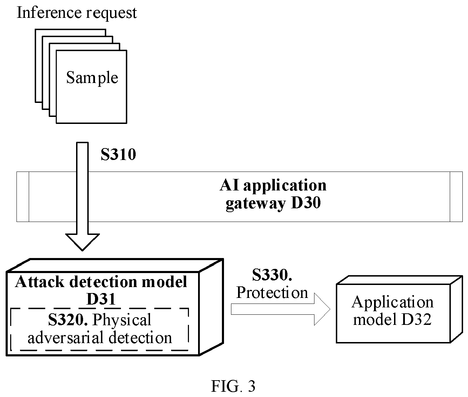

FIG. 3 is a first schematic flowchart of an attack detection method according to this application. The attack detection method is performed by an attack detection model D31. The attack detection model D31 is configured to detect a physical adversarial attack against an application model D32. For a training process of the attack detection model D31, refer to related content in FIG. 2. Details are not described herein again.

In a possible example, the attack detection model D31 and the application model D32 are deployed on a same physical device, for example, any one of the terminal 111 to the terminal 113, the server 120 shown in FIG. 1, or another processing device.

In another possible example, the attack detection model D31 and the application model D32 are deployed on different physical devices. For example, the attack detection model D31 is deployed on the terminal 111, and the application model D32 is deployed on the server 120 that communicates with the terminal 111.

It should be noted that, regardless of specific forms and locations of physical devices on which the attack detection model D31 and the application model D32 are deployed, management of the attack detection model D31 and the application model D32 may be implemented by an AI application gateway D30. The AI application gateway D30 is a physical machine configured to manage a plurality of AI models, or may be a virtual machine (virtual machine, VM), a container (container), or the like. The VM or the container is a software process configured to implement a function of the AI application gateway D30. When the AI application gateway D30 is the VM or the container, the AI application gateway D30 may be deployed on the foregoing terminal or server. This is not limited in this application.

An example in which the foregoing AI application gateway D30, the attack detection model D31, and the application model D32 are deployed on one physical device is used for description herein. As shown in FIG. 3, the attack detection method provided in this embodiment includes the following steps.

S310. The attack detection model D31 obtains an inference request.

It should be noted that, the inference request may be generated by a terminal deployed by the attack detection model D31, or may be sent by another device communicating with the terminal.

The inference request carries a to-be-processed dataset of the application model D32. The to-be-processed dataset includes one or more samples.

The foregoing sample is data to be processed by the application model D32, for example, a picture, a video, audio, or a text.

For example, when the application model D32 is a target detection model, the sample may be a picture or a video to be detected.

For another example, when the application model D32 is an object recognition model, the sample may be a picture or a video to be recognized.

For another example, when the application model D32 is a data analysis model, the sample may be audio, a text, or the like to be analyzed.

The foregoing example is merely an example provided in this embodiment for describing the inference request, and should not be understood as a limitation on this application.

In a possible case, the inference request further carries a type indicating that AI processing is to be performed, for example, the foregoing object recognition or target detection.

In addition, as shown in FIG. 3, the inference request obtained by the attack detection model D31 may be forwarded by the AI application gateway D30.

In a first possible example, if the attack detection model D31 and the application model D32 are deployed in parallel, the AI application gateway D30 further forwards the inference request to the application model D32.

In a second possible example, if the attack detection model D31 and the application model D32 are deployed in a serial mode, the attack detection model D31 forwards the inference request to the application model D32 after detecting that the inference request does not carry a physical adversarial example.

When the attack detection model D31 and the application model D32 are deployed in a serial mode, before the application model D32 receives the inference request, the attack detection model D31 already performs physical adversarial attack detection on the inference request, to ensure that the inference request obtained by the application model D32 does not carry the physical adversarial example. This greatly reduces a probability that the application model D32 is attacked, and improves security of the application model D32.

S320. The attack detection model D31 detects whether the physical adversarial example exists in the to-be-processed dataset.

For content of the physical adversarial example, refer to related descriptions in S210. Details are not described herein again.

In an optional implementation, S320 includes the following content: For each sample included in the to-be-processed dataset, the attack detection model D31 outputs security information of the sample, where the security information indicates confidence that the sample includes a physical adversarial perturbation; and if the confidence of the sample reaches a first threshold, the attack detection model D31 identifies the sample as the physical adversarial example for the application model D32.

That the confidence reaches the first threshold means that the confidence is greater than or equal to the first threshold. The first threshold may be set based on different application scenarios. For example, in a face-scanning payment scenario, the first threshold is 40%. For another example, in an access control detection scenario, the first threshold is 60%.

If the to-be-processed dataset includes a sample 1 to a sample 4, for the confidence indicated by the security information, Table 1 provides a possible case.

**Table 1**

| | Confidence (%) |
|---|---|
| Sample 1 | 12 |
| Sample 2 | 13 |
| Sample 3 | 65 |
| Sample 4 | 5 |

Confidence that the sample 1 includes the physical adversarial perturbation is 12%. Confidence that the sample 2 includes the physical adversarial perturbation is 13%. Confidence that the sample 3 includes the physical adversarial perturbation is 65%. Confidence that the sample 4 includes the physical adversarial perturbation is 5%.

If the first threshold is 50%, only the sample 3 in the sample 1 to the sample 4 reaches the first threshold, and the attack detection model D31 uses the sample 3 as the physical adversarial sample.

In addition, FIG. 1 is merely an example provided in this embodiment. The to-be-processed dataset may alternatively include only one sample, for example, the sample 3 shown in Table 1. When the sample 3 is identified as the physical adversarial example by the attack detection model D31, the attack detection model D31 may use the inference request as an attack request for the application model D32.

In this embodiment, because the attack detection model may perform physical adversarial attack detection on the sample carried in the inference request, a process of resisting a physical adversarial attack by the application model is replaced, so that the attack detection model replaces the application model to implement a function of physical adversarial attack detection. Therefore, the application model does not need to be reconstructed to resist the physical adversarial attack, and a decrease in precision of the application model caused by a reconstruction process of the application model in a common technology is avoided.

Optionally, if the to-be-processed dataset includes a plurality of samples, S320 may further include: The attack detection model D31 outputs a detection result of the to-be-processed dataset based on security information of the plurality of samples included in the to-be-processed dataset.

For example, if the plurality of samples included in the to-be-processed dataset has a first quantity (for example, 10) of physical adversarial examples, the attack detection model D31 determines that the to-be-processed dataset is provided by an attacker, and uses the inference request as an attack request.

In this embodiment, if the to-be-processed dataset includes a plurality of samples, the attack detection model may determine the detection result of the physical adversarial attack detection of the inference request based on the confidence that each sample in the plurality of samples includes the physical adversarial perturbation, avoiding the attack detection model incorrectly determining that the to-be-processed dataset includes a small quantity of physical adversarial examples by chance, and further determines the inference request as an attack request, so that accuracy of physical adversarial attack detection performed by the attack detection model is improved.

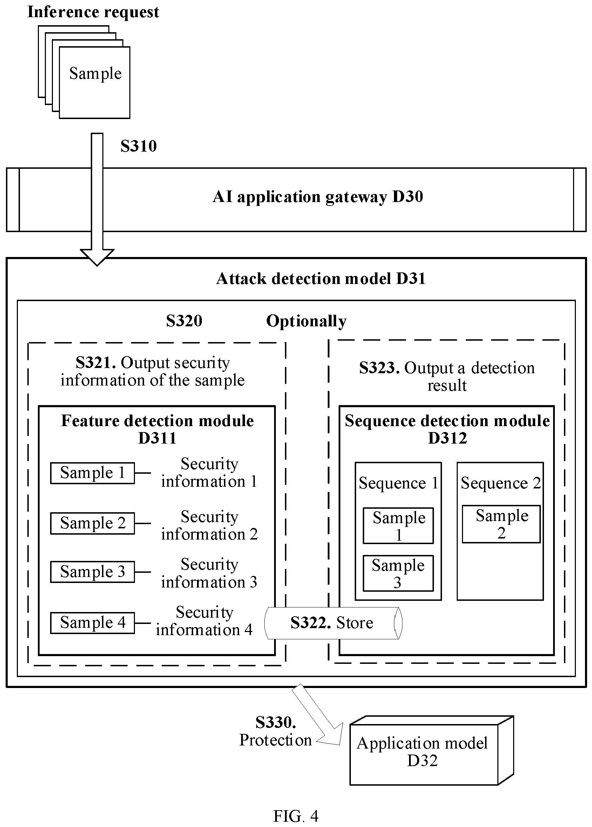

To complete detection of the sample carried in the inference request, based on FIG. 3, this embodiment provides an optional implementation. FIG. 4 is a second schematic flowchart of an attack detection method according to this application. The attack detection model D31 includes a feature detection module D311 and a sequence detection module D312.

The feature detection module D311 is configured to identify and detect a feature included in a sample. In some possible examples, the feature detection module D311 may further identify and mark an attack pattern of a physical adversarial perturbation included in the sample.

The sequence detection module D312 is configured to cache one or more physical adversarial examples.

For more functions of the feature detection module D311 and the sequence detection module D312, refer to related content in FIG. 4.

As shown in FIG. 4, S320 may include the following steps S321 to S323.

S321. For each sample included in the to-be-processed dataset, the feature detection module D311 outputs security information of the sample.

The feature detection module D311 identifies the sample as a physical adversarial example for an application model D32 if confidence of the sample reaches the first threshold.

S322. The feature detection module D311 stores the physical adversarial example in the sequence detection module D312 included in the attack detection model D31.

The sequence detection module includes a vector sequence formed based on detection results corresponding to successive inference requests of a user or a group of users. As shown in FIG. 4, the sequence detection module D312 may store a plurality of sequences (a sequence 1 and a sequence 2), and each sequence may be generated by different users.

For example, if the application model D32 is an AI model configured to detect a face in a video surveillance scenario, one inference request may include one video, and each frame of image in the video is a sample in the inference request, each sample may indicate faces of a same user or different users. Therefore, in a process in which an attacker performs a physical adversarial attack, the attacker may set, in one inference request, a plurality of physical adversarial examples generated by different users. As shown in FIG. 4, the sequence 1 stored in the sequence detection module D312 is a plurality of physical adversarial examples (a sample 1 and a sample 3) generated by a user 1, and the sequence 2 stored in the sequence detection module D312 is a plurality of physical adversarial examples (a sample 2) generated by a user 2.

The sequence detection module D312 may analyze the foregoing detection result sequence by using a method such as statistical analysis or threshold determining, and determine whether input by the sequence/user includes the physical adversarial perturbation or is performing the physical adversarial attack. Still refer to FIG. 4, S320 may further include the following step S323.

S323. If a quantity of physical adversarial examples in the plurality of samples is greater than or equal to a first quantity, the sequence detection module D312 determines that the inference request is an attack request.

In this embodiment, the sequence detection module identifies the inference request as the attack request only when the inference request has a specific quantity of physical adversarial examples, to avoid incorrectly identifying the inference request as the attack request when the feature detection module incorrectly identifies that the inference request has a single physical adversarial example or a small quantity of physical adversarial examples, so that identification accuracy of the attack detection model is improved.

Optionally, when the application detection model D32 and the attack detection model D31 are deployed in a serial mode, if the inference request does not carry the physical adversarial example, the attack detection model D31 forwards the inference request to the application model D32, so that the application model D32 performs AI processing on the inference request.

Before the application model receives the inference request, the attack detection model already performed physical adversarial attack detection on the inference request, to ensure that the inference request obtained by the application model does not carry the physical adversarial example. This greatly reduces a probability that the application model is attacked, and improves security of the application model.

Still refer to FIG. 3, the attack detection method provided in this embodiment further includes the following step S330.

S330. The attack detection model D31 performs protection processing on the application model D32 if the physical adversarial example exists in the to-be-processed dataset.

The attack detection model D31 may perform protection processing on the application model D32 in a plurality of possible implementations. This embodiment provides the following two possible cases.

In a first case, the attack detection model D31 blocks the application model D32 from processing the inference request.

In this embodiment, a protected application model does not need to be changed. The attack detection model determines whether an input sample included in the inference request is a physical adversarial example, and feeds back a result to a corresponding access control mechanism, so that the AI application gateway blocks the physical adversarial attack.

When the attack detection model D31 and the application model D32 are deployed in parallel, the attack detection model D31 sets a processing result output by the application model D32 to an invalid result. Because the processing result output by the application model D32 is set to an invalid result, no valid output for AI processing performed by the application model D32 on the physical adversarial example exists, and an attacker cannot obtain a model parameter or other data of the application model D32 by using the physical adversarial example included in the inference request, so that security of the application model D32 is improved.

When the attack detection model D31 and the application model D32 are deployed in a serial mode, the attack detection model D31 discards the foregoing inference request. Because the attack detection model D31 determines that the inference request includes the physical adversarial example, and discards the inference request, the application model D32 cannot obtain the physical adversarial example used by the attacker to perform the physical adversarial attack. In other words, the application model D32 does not process the physical adversarial example if the application model D32 does not perform input. Therefore, the attacker cannot obtain a model parameter or other data of the application model D32, so that security of the application model D32 is improved.

In other words, in this embodiment, because a protected application model does not need to be changed, the protected application model may also be defended against the physical adversarial attack by the attack detection model. Therefore, precision of the application model is not decreased due to reconstruction, and accuracy of the application model is improved.

In a second case, the attack detection model D31 records an alarm log, where the alarm log indicates that the inference request includes the physical adversarial example.

As shown in FIG. 3, if a plurality of AI models are all managed by the AI application gateway D30, the attack detection model D31 may further send the alarm log to the AI application gateway D30, so that the AI application gateway D30 records the alarm log. The alarm log may be used for subsequent protection for a protected application model. For example, if the AI application gateway D30 records, within a specific time length, a plurality of inference requests sent by a same client, and the plurality of inference requests each include a physical adversarial example, the AI application gateway D30 may identify the client as an attacker, and block another request subsequently sent by the client, to achieve an objective of protecting the application model D32.

Due to particularity of the application model D32, if the inference request has only a small quantity of physical adversarial examples within a specific time length, the application model D32 is not affected. To be specific, the small quantity of physical adversarial examples in one inference request are generally not determined as physical adversarial attacks of the application model D32. Security of the application model D32 is affected only when the application model 32 is continuously attacked by physical adversarial examples in a plurality of inference requests.

A case in which the application model 32 is continuously attacked by physical adversarial examples in a plurality of inference requests may include, but is not limited to: model extraction (model extraction), member inference (membership inference), model inversion (model inversion) and the like.

The model extraction refers to a behavior that an attacker polls a model parameter of an application model by using different samples when a server sets the model parameter of the application model in a cloud and the cloud provides the model parameter to a user.

The member inference refers to a behavior that an attacker uses a sample (including a physical adversarial example and a standard sample) to repeatedly poll an application model to determine whether a sample or a group of samples is in a training sample set of the application model.

The model inversion refers to a behavior that an attacker uses a sample (including a physical adversarial example and a standard sample) to repeatedly poll an application model, and constructs an equivalent model of the application model based on a polling result, or reversely constructs a training sample set of the application model.

In this embodiment, the attack detection model records the inference request having the physical adversarial example, so that the attack detection model implements awareness of a security situation of the physical adversarial attack. The security situation is a security condition of the application model in a specific time length. For example, in this application, the security situation refers to whether the application model being physical adversarial attacked by an attacker. In this way, the attack detection model avoids behaviors such as the model extraction, the member inference, and the model inversion, so that a leakage of a model parameter and a training sample set of the application model is avoided, and security of the application model is improved.

In some possible cases, the AI application gateway may identify an event that one inference request has a small quantity of physical adversarial examples as a probing attack of the attacker. Alternatively, the AI application gateway may identify an event that a plurality of inference requests each has a large quantity of physical adversarial examples as a physical adversarial attack flow of the attacker. After identifying the foregoing probing attack or the physical adversarial attack flow, the AI application gateway and the attack detection model may mark a client that sends the inference request as the attacker, and refuse to receive another request of the client, to protect the foregoing application model and improve security of the application model.

In this way, in this embodiment, the attack detection model different from the application model is used to detect whether the physical adversarial example exists in the inference request. Because the application model does not need to resist a physical adversarial attack, model retraining, defensive distillation, or the like does not need to be performed on the application model, so that a decrease in precision of the application model caused by reconstruction of the application model is avoided. In addition, in some possible cases, the attack detection model may further use a detected physical adversarial example for training, to optimize an attack detection capability of the attack detection model, and improve accuracy of physical adversarial attack detection.

In addition, because a model manufacturer of the application model does not need to consider a physical adversarial attack threat faced by the application model, the model manufacturer only needs to deploy the application model on a computing power platform that provides an attack detection model, so that a perception (detection) and defense capability of the application model for the physical adversarial attack can be obtained.

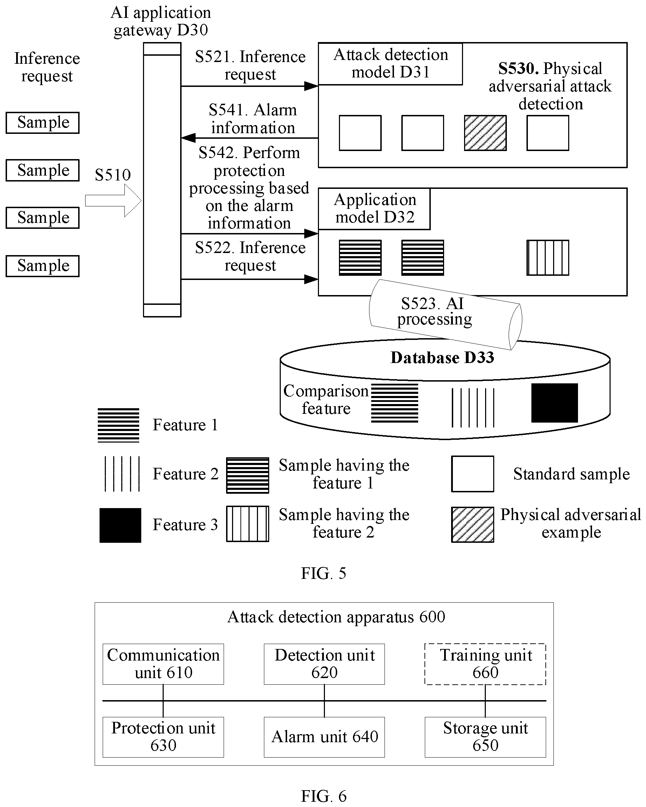

For the attack detection method provided in the foregoing embodiment, based on the AI application gateway D30, the attack detection model D31, and the application model D32, this application further provides a possible specific implementation. FIG. 5 is a third schematic flowchart of an attack detection method according to this application. The attack detection model D31 and the application model D32 are deployed in parallel, and the application model D32 is further connected to a database D33.

The database 33 stores a plurality of comparison features. The comparison features are used for supporting implementation of an AI processing function of the application model D32. A process of the AI processing may be, but is not limited to, object recognition, target detection, object classification, and the like.

An example in which AI processing is biometric feature recognition is used for description herein. A biometric feature may be but is not limited to information such as a face, a fingerprint, a body size, and an eye iris. As shown in FIG. 5, the attack detection method provided in this embodiment includes the following steps.

S510. The AI application gateway D30 obtains an inference request.

S521. The AI application gateway D30 sends the inference request to the attack detection model D31.

S522. The AI application gateway D30 sends the inference request to the application model D32.

When the AI application gateway receives the inference request (biometric feature input information, such as a video or a photo) from a client (a terminal or a client), the AI application gateway sends the inference request to the application model, and further forwards the inference request or a sample (for example, capturing a frame of image from a video every second to control computing power required for attack detection) from the inference request to the attack detection model.

For specific implementations of S510 to S522, refer to the content of S310. Details are not described herein again.

S523. The application model D32 performs AI processing on the inference request.

As shown in FIG. 5, the application model D32 may process, by using a plurality of comparison features (a feature 1 to a feature 3) stored in the database D33, four samples carried in the inference request, and determine that the inference request includes two samples having the feature 1 and one sample having the feature 2.

In a process in which the application model D32 performs AI processing on the inference request, the attack detection model D31 may further perform a process of physical adversarial attack detection, as shown in S530 below.

S530. The attack detection model D31 performs physical adversarial attack detection on a plurality of samples included in the inference request.

For example, the attack detection model D31 performs, by using a feature detection module D311 pre-trained by the attack detection model D31, inference analysis on a photo (or a photo sequence) forwarded by the AI application gateway D30, determines whether the photo (or the photo sequence) includes a physical adversarial perturbation, and provides confidence or a probability of determining. For a specific implementation and beneficial effects of S530, refer to the content of S320. Details are not described herein again.

When the feature detection model determines, at high confidence, that the inference request includes a physical adversarial perturbation/attack, the attack detection model D31 may generate and output alarm information, as S541 shown in FIG. 5.

S541. The attack detection model D31 sends the alarm information to the AI application gateway D30.

The alarm information indicates that the inference request includes the physical adversarial perturbation/attack. In some cases, the alarm information is recorded in a log (log) format.

S542. The AI application gateway D30 performs protection processing on the application model D32 based on the alarm information.

For a specific implementation of S542, refers to the content of S330. Details are not described herein again.

For example, when the AI application gateway D30 performs protection processing on the application model D32, the AI application gateway D30 and the attack detection model D31 may intercept a biometric feature recognition result of the application model D32, so that a case in which an attacker uses the physical adversarial example to bypass authentication based on biometric feature recognition is avoided, and security of the application model D32 is improved.

This embodiment may provide a "model-independent" physical adversarial attack detection mechanism, to detect whether the physical adversarial example exists in the inference request in a biometric feature recognition scenario, provide awareness of a security situation during running of the application model, and further implement an alarm for a physical adversarial attack.

For example, first, a server generates (and marks) various physical adversarial examples for biometric feature recognition, and trains, based on a DNN model, a corresponding attack detection model by using a data-driven method. Second, the server may deploy, in a corresponding AI application environment in a manner independent of a (protected AI) model, an attack detection engine integrated with the attack detection model, and the attack detection engine and the application model may synchronously receive an inference request (input sample) of an application. Finally, in the AI processing process of the application model, the attack detection model may synchronously determine whether the inference request includes the physical adversarial example (a perturbation), to detect a physical adversarial attack for biometric feature recognition.

It may be understood that, to implement the functions in the foregoing embodiments, the server and the terminal device include corresponding hardware structures and/or software modules for performing the functions. A person skilled in the art should be easily aware that, in combination with the units and the method steps in the examples described in embodiments disclosed in this application, this application can be implemented through hardware or a combination of hardware and computer software. Whether a function is executed through hardware or hardware driven by computer software depends on particular application scenarios and design constraint conditions of the technical solutions.

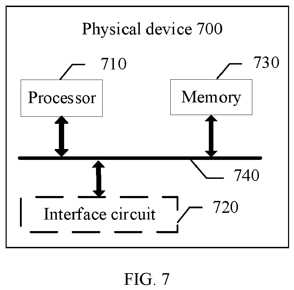

FIG. 6 and FIG. 7 are schematic diagrams of structures of a possible attack detection apparatus and a possible physical device according to embodiments of this application. The attack detection apparatus and the physical device may be configured to implement functions of the server 120 and any terminal in the foregoing method embodiments. Therefore, beneficial effects of the foregoing method embodiments can also be implemented. In this embodiment of this application, an attack detection apparatus 600 may be the server 120 shown in FIG. 1, or may be a module (for example, a chip) used in the server 120, or may be any terminal shown in FIG. 1.

As shown in FIG. 6, the attack detection apparatus 600 includes a communication unit 610, a detection unit 620, a protection unit 630, an alarm unit 640, a storage unit 650, and a training unit 660. The attack detection apparatus 600 is configured to implement functions of the method embodiments shown in FIG. 2 to FIG. 5.

When the attack detection apparatus 600 is configured to implement the method embodiment shown in FIG. 2, the communication unit 610 is configured to perform S210, and the training unit 660 is configured to perform S220 and S230.

When the attack detection apparatus 600 is configured to implement the method embodiment shown in FIG. 3, the communication unit 610 is configured to perform S310, the detection unit 620 is configured to perform S320, and the protection unit 630 is configured to perform S330.

When the attack detection apparatus 600 is configured to implement the method embodiment shown in FIG. 4, the communication unit 610 is configured to perform S310, the detection unit 620 is configured to perform S321 to S323, and the protection unit 630 is configured to perform S330.

When the attack detection apparatus 600 is configured to implement the method embodiment shown in FIG. 5, the communication unit 610 is configured to perform S510, S521, and S522, the detection unit 620 is configured to perform S530, and the alarm unit 640 is configured to perform S541 and S542.

In addition, the storage unit 650 may be configured to store the foregoing inference request, a physical adversarial example identified by the attack detection model D31, and the like.

For more detailed descriptions and beneficial effects of the communication unit 610, the detection unit 620, the protection unit 630, the alarm unit 640, the storage unit 650, and the training unit 660, directly refer to related descriptions in the method embodiments shown in FIG. 2 to FIG. 5. Details are not described herein.

As shown in FIG. 7, FIG. 7 is a schematic diagram of a structure of a physical device according to this application. The physical device 700 includes a processor 710 and an interface circuit 720. The physical device 700 may be the foregoing server, terminal, another computing device, or the like.

The processor 710 and the interface circuit 720 are coupled to each other. It may be understood that the interface circuit 720 may be a transceiver or an input/output interface. Optionally, the physical device 700 may further include a memory 730, configured to store instructions executed by the processor 710, or store input data required by the processor 710 to run the instructions, or store data generated after the processor 710 runs the instructions.

When the physical device 700 is configured to implement the methods shown in FIG. 2 to FIG. 5, the processor 710 and the interface circuit 720 are configured to perform functions of the communication unit 610, the detection unit 620, the protection unit 630, the alarm unit 640, the storage unit 650, and the training unit 660. The processor 710, the interface circuit 720, and the memory 730 may further collaboratively implement operation steps in the attack detection method. The physical device 700 may further perform the functions of the attack detection apparatus 600 shown in FIG. 6. Details are not described herein.

In this embodiment of this application, a specific connection medium between the interface circuit 720, the processor 710, and the memory 730 is not limited. In this embodiment of this application, the interface circuit 720, the processor 710, and the memory 730 are connected through a bus 740 in FIG. 7. The bus is represented by using a bold line in FIG. 7. A connection manner between other components is merely an example for description, and is not limited thereto. The bus may include an address bus, a data bus, a control bus, and the like. For ease of representation, only one bold line is used for representation in FIG. 7, but this does not mean that there is only one bus or only one type of bus.

The memory 730 may be configured to store a software program and a module, for example, program instructions/a module corresponding to the attack detection method provided in embodiments of this application. The processor 710 executes the software program and the module stored in the memory 730, to perform various functional applications and data processing. The interface circuit 720 may be configured to perform signaling or data communication with another device. In this application, the physical device 700 may have a plurality of interface circuits 720.

It may be understood that the processor in embodiments of this application may be a CPU, a neural processing unit (Neural processing unit, NPU), or a graphic processing unit (Graphic processing unit, GPU); or may be another general-purpose processor, a DSP, an ASIC, an FPGA or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may exist in the network device or the terminal device as discrete components.

All or some of the foregoing embodiments may be implemented by using software, hardware, firmware, or any combination thereof. When software is used for implementing embodiments, all or a part of embodiments may be implemented in a form of a computer program product. The computer program product includes one or more computer programs or instructions. When the computer programs or instructions are loaded and executed on a computer, all or some of procedures or functions in embodiments of this application are executed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD); or may be a semiconductor medium, for example, a solid-state drive (solid-state drive, SSD).

In embodiments of this application, unless otherwise specified or a logic conflict occurs, terms and/or descriptions in different embodiments are consistent and may be mutually referenced, and technical features in different embodiments may be combined to form a new embodiment based on an internal logical relationship thereof.

In this specification, the claims, and the accompanying drawings of this application, the terms "first", "second", "third", and the like are intended to distinguish between different objects but do not limit a particular order. The terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a relative concept in a specific manner.

In this application, "at least one" means one or more, and "a plurality of' means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. In addition, an element (element) that appears in singular forms "a", "an", and "the" does not mean "one or only one" unless otherwise specified in the context, but means "one or more". For example, "a device" means one or more such devices. Furthermore, "at least one of (at least one of)..." means one or any combination of associated objects that follow. For example, "at least one of A, B, and C" includes A, B, C, AB, AC, BC, or ABC.

It may be understood that various numbers in embodiments of this application are merely used for differentiation for ease of description, and are not used for limiting the scope of embodiments of this application. The sequence numbers of the foregoing processes do not mean execution sequences. The execution sequences of the processes should be determined based on functions and internal logic of the processes.

## Claims

1. An attack detection method, wherein the method comprises:
obtaining, by an attack detection model, an inference request, wherein the inference request carries a to-be-processed dataset of an application model, and the to-be-processed dataset comprises one or more samples;
detecting, by the attack detection model, whether a physical adversarial example exists in the to-be-processed dataset; and
performing, by the attack detection model, protection processing on the application model if the physical adversarial example exists in the to-be-processed dataset.

2. The method according to claim 1, wherein the attack detection model is determined based on a training dataset, and the training dataset comprises a plurality of physical adversarial examples and a plurality of standard samples for the application model.

3. The method according to claim 1 or 2, wherein the detecting, by the attack detection model, whether a physical adversarial example exists in the to-be-processed dataset comprises:
for each sample comprised in the to-be-processed dataset, outputting, by the attack detection model, security information of the sample, wherein the security information indicates confidence that the sample comprises a physical adversarial perturbation; and
identifying, by the attack detection model, the sample as a physical adversarial example for the application model if the confidence of the sample reaches a first threshold.

4. The method according to claim 3, wherein the security information of the samples is obtained by a feature detection module comprised in the attack detection model.

5. The method according to claim 3 or 4, wherein
the detecting, by the attack detection model, whether a physical adversarial example exists in the to-be-processed dataset further comprises:
outputting, by the attack detection model, a detection result of the to-be-processed dataset based on security information of a plurality of samples comprised in the to-be-processed dataset.

6. The method according to claim 5, wherein
the outputting, by the attack detection model, a detection result of the to-be-processed dataset based on security information of a plurality of samples comprised in the to-be-processed dataset comprises:
storing, by the attack detection model, the physical adversarial example in a sequence detection module comprised in the attack detection model; and
if a quantity of physical adversarial examples in the plurality of samples is greater than or equal to a first quantity, determining, by the sequence detection module, that the inference request is an attack request.

7. The method according to any one of claims 1 to 6, wherein
the performing, by the attack detection model, protection processing on the application model comprises:
blocking, by the attack detection model, the application model from processing the inference request.

8. The method according to claim 7, wherein
the blocking, by the attack detection model, the application model from processing the inference request comprises:
setting, by the attack detection model, a processing result output by the application model to an invalid result.

9. The method according to claim 7, wherein
the blocking, by the attack detection model, the application model from processing the inference request comprises:
discarding, by the attack detection model, the inference request.

10. The method according to any one of claims 1 to 6, wherein the method further comprises:
recording, by the attack detection model, an alarm log, wherein the alarm log indicates that the inference request comprises the physical adversarial example.

11. An attack detection apparatus, wherein the attack detection apparatus is used in an attack detection model, and the attack detection apparatus comprises:
a communication unit, configured to obtain an inference request, wherein the inference request carries a to-be-processed dataset of an application model, and the to-be-processed dataset comprises one or more samples;
a detection unit, configured to detect whether a physical adversarial example exists in the to-be-processed dataset; and
a protection unit, configured to perform protection processing on the application model if the physical adversarial example exists in the to-be-processed dataset.

12. The apparatus according to claim 11, wherein the attack detection model is determined based on a training dataset, and the training dataset comprises a plurality of physical adversarial examples and a plurality of standard samples for the application model.

13. The apparatus according to claim 11 or 12, wherein the detection unit is specifically configured to: for each sample comprised in the to-be-processed dataset, output security information of the sample, wherein the security information indicates confidence that the sample comprises a physical adversarial perturbation; and
the detection unit is specifically configured to identify the sample as a physical adversarial example for the application model if the confidence of the sample reaches a first threshold.

14. The apparatus according to claim 13, wherein the security information of the samples is obtained by a feature detection module comprised in the attack detection model.

15. The apparatus according to claim 13 or 14, wherein the detection unit is further configured to output a detection result of the to-be-processed dataset based on security information of a plurality of samples comprised in the to-be-processed dataset.

16. The apparatus according to claim 15, wherein the detection unit is specifically configured to store the physical adversarial example in a sequence detection module comprised in the attack detection model; and
the detection unit is specifically configured to: if a quantity of physical adversarial examples in the plurality of samples is greater than or equal to a first quantity, determine that the inference request is an attack request.

17. The apparatus according to any one of claims 11 to 16, wherein the protection unit is specifically configured to block the application model from processing the inference request.

18. The apparatus according to claim 17, wherein the protection unit is specifically configured to set a processing result output by the application model to an invalid result.

19. The apparatus according to claim 17, wherein the protection unit is specifically configured to discard the inference request.

20. The apparatus according to any one of claims 11 to 16, wherein the attack detection apparatus further comprises an alarm unit, configured to record an alarm log, and the alarm log indicates that the inference request comprises the physical adversarial example.

21. An attack detection system, comprising a first device and a second device, wherein an attack detection model is deployed in the first device, an application model is deployed in the second device, and
the first device obtains an inference request of a client, wherein the inference request carries a to-be-processed dataset of the application model, and the to-be-processed dataset comprises one or more samples;
the first device detects whether a physical adversarial example exists in the to-be-processed dataset; and
the first device performs protection processing on the application model deployed in the second device if the physical adversarial example exists in the to-be-processed dataset.

22. A computer program product, wherein the computer program product comprises instructions, and when the computer program product runs on a server or a terminal, the server or the terminal executes the instructions, to implement the method according to any one of claims 1 to 10.
